# EUROPÄISCHE PATENTANMELDUNG

(11) **EP 0 918 392 A1**
(43) Veröffentlichungstag der Anmeldung: **26.05.1999**
(21) Anmeldenummer: 98121715.1
(22) Anmeldetag: 14.11.1998
(51) Int. Cl.: H02K 41/035

(54) **Linearantrieb**

(30) Priorität: 19.11.1997 DE 19751176
(71) Anmelder: Schultz, Wolfgang E., Dipl.-Ing., D-87700 Memmingen (DE)
(72) Erfinder: Kleinert, Dieter Dipl.-Ing., 87700 Memmingen (DE); Wassermann, Horst Dipl.-Ing., 87700 Memmingen (DE)
(74) Vertreter: Pfister, Helmut, Dipl.-Ing.

(57) **Zusammenfassung**

Es wird ein Linearantrieb vorgeschlagen, welcher im Wesentlichen aus einem feststehenden Lager besteht und auf dem Lager ein beweglicher Schlitten angeordnet ist und die Bewegung des Schlittens durch eine elektromagnetische Kraft erfolgt, wobei bei dem feststehenden Lager magnetische Elemente vorgesehen sind und in auf dem Schlitten eine Magnetspule angeordnet ist, die bei Strombeaufschlagung eine Bewegung des Schlittens bewirkt.

## Beschreibung

Die Erfindung betrifft einen Linearantrieb, im wesentlichen bestehend aus einem feststehenden Lager und einem auf dem Lager geführten beweglichen Schlitten, wobei die Bewegung des Schlittens durch elektromagnetische Kräfte erfolgt.

Eingangs beschriebene Linearantriebe sind hinlänglich bekannt. Zu diesen zählen z.B. Hubmagnete, bei denen eine feststehende Spule mit Strom beaufschlagt wird und dadurch ein Magnetfeld erzeugt wird, um einen in dem Ankerraum geführten Anker anzuziehen oder abzustoßen. Die Bewegung der Ankerstange bzw. des Ankers dient zur entsprechenden Steuerung eines mit diesem Anker verbundenen Elementes.

Die vorbeschriebenen Linearsysteme werden z.B. in Webmaschinen eingesetzt. Die Hauptanforderung entsprechender Linearsysteme bzw. Magnete ist, daß Schaltvorgänge sehr schnell, das heißt, in einem Bereich von 2 - 5 Millisekunden, durchgeführt werden müssen. Neben diesen schnellen Schaltzeiten wird auch eine sehr hohe Lebensdauer (bis zu 5 Mrd. Schaltungen) von solchen Linearsystemen erwartet.

Die bekannten Systeme haben jedoch den Nachteil, daß die Hubbewegung, bedingt durch den Aufbau des magnetischen Feldes, relativ langsam erfolgt. Darüberhinaus sind die Hubbewegungen der bekannten Systeme physikalisch bedingt sehr stark vom Arbeitsluftspalt zwischen dem Anker und dem Pol abhängig. Daraus resultiert auch eine verhältnismäßig kurzer Hubweg, bezogen auf die Abmessung des Gerätes (Spulenlänge bzw. Ankerlänge).

Die vorliegende Erfindung hat es sich zur Aufgabe gemacht, die Linearantriebe, wie eingangs beschrieben, dahingehend zu verbessern, daß diese bei gleich hoher Zuverlässigkeit eine höhere Schaltrate, also eine kürzere Schaltzeit, aufweisen.

Gelöst wird diese Aufgabe durch ein Linearsystem, wie eingangs beschrieben, wobei der Schlitten eine oder mehrere Wicklungen trägt, die mit Strom beaufschlagbar ist/sind und am Lager ein oder mehrere magnetische Elemente vorgesehen ist/sind, die im Zusammenwirken mit der strombeaufschlagten Wicklung eine Bewegung des Schlittens ergibt.

Bei der erfindungsgemäßen Ausgestaltung ist vorgesehen, daß der Schlitten von dem Lager geführt ist. Durch die Ausgestaltung der Erfindung ist es möglich, einen kleinen Arbeitsluftspalt, der sich zwischen dem Schlitten und dem Lager befindet, zu realisieren, wodurch ein hoher Wirkungsgrad bzw. eine hohe Effizienz des Linearantriebes resultiert. Der Arbeitsluftspalt verändert sich bei der Bewegung des Schlittens auf dem Lager nicht. Da, wie bei den bekannten Linearantrieben, die Hubbewegung insbesondere durch den Arbeitsluftspalt begrenzt ist, können durch die erfindungsgemäße Ausgestaltung relativ große Hübe erreicht werden. Hierzu ist aber der Linearantrieb in gleicher Weise nicht übermäßig groß auszugestalten, da über die gesamte Hubbewegung eine, entsprechend des resultierenden geringeren Arbeitsluftspaltes, hohe Magnetkraft zur Verfügung steht und somit auch eine hohe Betätigungskraft des Schlittens ausnützbar ist. Es werden somit zwei sich ansonsten widersprechende Anforderungen an einen Linearantrieb in einem gemeinsamen Gerät realisiert. Üblicherweise führt eine große Hubbewegung zu großen Arbeitsluftspalten und somit zu geringen wirksamen Kräften und damit zu geringen Betätigungsmöglichkeiten. Die Erfindung erreicht jedoch eine Verknüpfung dieser an sich entgegengesetzten Eigenschaften.

Um eine entsprechende Hubleistung zu erreichen, wird hierzu einfach nur die Länge des Lagers variiert.

Das Lager, welches zum Beispiel auch das Gehäuse des Linearantriebes bzw. des Gerätes umfassen kann, trägt hierbei ein oder mehrere magnetischen Elemente, die mit dem Magnetfeld, welches durch die strombeaufschlagte Wicklung erzeugt wird, zusammenwirkt. Die elektromagnetische Kraft, die durch die Strombeaufschlagung entsteht, ist in bekannter Weise der Polarisierung dieser magnetischen Elemente entgegengesetzt. Durch Variation der Anordnung der magnetischen Elemente sind verschiedene Eigenschaften des Linearantriebes realisierbar. Allgemein dient das Lager aber auch für eine Leitung des magnetischen Flusses, um dadurch eine entsprechende effiziente Ausnutzung des eingeprägten Stromes zu erreichen.

Günstigerweise wird der Schlitten spulenartig ausgestaltet. Die Spule, also ein im wesentlichen zylindrischer, mit kreisrundem Querschnitt versehener Körper, ist in beliebigen Dimensionen leicht herstellbar. Die Spule trägt eine oder mehrere Wicklungen eines den Strom leitenden Kabels.

In der bevorzugten Ausgestaltung der Erfindung ist vorgesehen, daß das Lager den Schlitten mantelartig umgibt, derart, daß der Schlitten in dem Lager bzw. in einem Teil des Lagers geführt ist. Die Lagerung des Schlittens auf dem Lager kann im Prinzip in zwei verschiedenen Ausgestaltungen erfolgen. Der Schlitten, insbesondere, wenn dieser als Spulenkörper im wesentlichen rotationssymmetrisch ausgebildet ist, kann von dem Lager, wie beschrieben, mantelartig umschlossen werden. Das Lager bzw. ein Teil des Lagers weist hierbei eine der Außenkontur des Schlittens bzw. der Spule angepaßte Form auf, die derart optimiert ist, daß eine optimale Führung des Schlittens möglich ist.

Neben der Ausgestaltung, daß der Schlitten in dem Lager geführt ist, ist es auch möglich, daß der Schlitten auf dem Lager geführt ist bzw. das Lager bzw. einen Teil des Lagers umgibt. Das Lager umfaßt hierbei z. B. sowohl das Element, welches dem Gerät eine mechanische Stabilität verleiht, wie auch das Element, welches mit dem Schlitten derart zusammenwirkt, daß der bewegliche Schlitten auf dem Lager beweglich bzw. verschiebbar ist. Bevorzugterweise sind an dem Lager auch Mittel für das Befestigen an einem Maschinengestell oder dergleichen vorgesehen.

Hierbei ist es von Vorteil, wenn eine möglichst spaltfreie oder sehr enge Lagerung realisiert wird.

Desweiteren ist vorgesehen, daß der Schlitten bzw. der Spulenkörper aus leichtem Material, insbesondere aus Kunststoff, gefertigt ist. Im Vergleich zu den bekannten Linearantrieben bestehen die beweglichen Elemente, die Anker, aus einer Metalllegierung mit entsprechend höherem spezifischen Gewicht. Da die magnetischen Kräfte bei vorgegebenen geometrischen Abmessungen des Linearantriebes und auf Grund der Wärmeentwicklung und sonstigen physikalischen Grenzen nicht beliebig steigerbar sind, ist bei vorgegebener Masse des zu bewegenden Körpers auch die maximal realisierbaren Beschleunigungen leicht bestimmbar. Erreicht man jetzt jedoch eine Absenkung des Gewichtes des beweglichen Teiles, z.B. durch die Verwendung eines sehr leichten Materials für den Spulenkörper, so wird dadurch bei Beibehaltung der elektrischen und somit auch magnetischen Eigenschaften des Antriebes eine Erhöhung der Beschleunigung erreicht, welches zu kürzeren Steuerzeiten und somit zu höheren Steuerraten führt. Mit den erfindungsgemäß vorgeschlagenen Linearantrieben sind Schaltvorgänge realisierbar, die eine Reaktionszeit von 0,2 bis 0,4 Millisekunden betragen, und somit ca. zehnfach schneller wie die bekannten Linearantriebe.

In der bevorzugten Ausgestaltung der Erfindung ist vorgesehen, daß der Schlitten bzw. der Spulenkörper dünnwandig ist, insbesondere die Wanddicke des Spulenkörpers bis zu 10 % des Durchmessers des Spulenkörpers beträgt. Bei dieser Ausgestaltung wird ein weiterer Vorteil der Erfindung deutlich. Durch eine entsprechend geschickte geometrische Anordnung ist es möglich, einen verhältnismäßig großbauenden Spulenkörper zu verwenden, der einfacher herzustellen ist als ein kleiner Anker. Hierbei ist zu beachten, daß bei den bekannten Hubmagneten auch eine Spule vorgesehen ist. Gleichzeitig ist dieses bewegliche Element leichter auszuführen, um höhere Beschleunigungen zu erreichen und trotzdem eine insgesamt kleine Bauweise des Gerätes zu verwirklichen. Im Gegensatz zu den bekannten Hubmagneten war der Größe des beweglichen Elementes auf Grund seiner Masse und der daraus resultierenden Trägheit, enge Grenzen gesetzt. Bei der erfindungsgemäßen Ausgestaltung kann jedoch ein verhältnismäßig großer Schlitten ausgebildet werden, der auf Grund seiner Ausgestaltung günstige mechanische Eigenschaften aufweist und gleichzeitig leicht bearbeitbar bleibt.

Auch ist es günstig, daß das Lager einen Mittelpol aufweist, wobei der Schlitten auf dem Mittelpol geführt ist. Besonders dann, wenn als Schlitten ein Spulenkörper Verwendung findet, ist es günstig, daß der rohrförmige Spulenkörper den bolzenartigen, zylinderischen oder fingerartigen Mittelpol umgibt.

Bekanntermaßen erzeugt eine Magnetspule im Spuleninneren ihre höchste Magnetfeldstärke. Der Mittelpol, der z. B. aus magnetischem Material gebildet ist und/oder magnetische Elemente trägt, übernimmt hierbei eine Doppelfunktion. Er dient als Lager für die Führung und als Mittel, welches mit dem durch die Spule beaufschlagten Magnetfeld zusammenwirkt. Die Herstellung eines zylindrischen Gleitlagers für einen rohrförmigen Schlitten ist nicht aufwendig. Die elektromagnetischen Kräfte wirken im Spuleninneren optimal mit den Magnetkräften des magnetischen Elementes zusammen.

In einer Variante der Erfindung ist ein Außenpol, welcher rohrförmig ausgebildet ist, vorgesehen, in dem der Schlitten geführt wird.

Bei dieser Ausgestaltung, bei der das Lager den Außenpol bildet, wird der Schlitten bzw. der Spulenkörper von dem Außenpol umgeben und durch entsprechende Maßtoleranzen gleitend geführt.

In gleicher Weise ist es möglich, daß der auf dem Mittelpol geführte Schlitten noch zusätzlich von einem Außenpol beeinflußt und geführt wird. Der Außenpol kann hierbei zum Beispiel eine zusätzliche mechanische Führung ergeben oder aber auch durch entsprechende magnetische Elemente den magnetischen Fluß steuern und somit auch die Bewegung des Schlittens beeinflussen.

Desweiteren ist vorgesehen, daß an dem Außen- und/oder Mittelpol ein oder mehrere Permanentmagnete als magnetische Elemente angeordnet sind. Als Permanentmagnete werden zum Beispiel Seltene-Erden-Legierungen verwendet, die eine hohe Magnetkraft besitzen. Es ist hierbei möglich, daß die Permanentmagnete in dem Außen- bzw. Mittelpol integriert sind, das heißt, der Außen- und der Mittelpol einstückig mit dem Permanentmagneten verbunden ist oder aber die Pole eine entsprechende Aussparung aufweisen, um die Magnete als separate Elemente aufzunehmen. Es ist hierbei vorgesehen, daß die Nord-Süd-Polrichtung der magnetischen Elemente parallel, rechtwinklig oder in jedem anderen Winkel zur Flußrichtung des magnetischen Feldes des mit einem strombeaufschlagten Spulenkörpers (die im wesentlichen parallel zur Achsrichtung der Spule ist) orientiert ist.

Dabei ist es auch möglich, daß als magnetische Elemente nicht nur Permanentmagneten eingesetzt werden, sondern die magnetischen Elemente durch entsprechend geschaltete Elektromagneten bzw. Elektromagnetspulen realisierbar sind.

Vorteilhaft ist es auch, daß das Lager topfartig ausgebildet ist und der Boden dieses Topfes als Polschuh für den Mittel- oder Außenpol dient. Der Polschuh dient zur Flußsteuerung des magnetischen Flusses, so daß ein optimaler Wirkungsgrad erzielt wird. Es werden hierzu Materialien verwendet, die eine günstige flußleitende Eigenschaft aufweisen.

Gegebenenfalls sind im Polschuh Durchführungsöffnungen für weitere Führungen oder elektrische Anschlußkabel vorgesehen.

In einer weiteren Variante der Erfindung ist vorgesehen, daß zwischen dem Lager und dem Schlitten, insbesondere dem Spulenkörper, eine Gleitfolie angeordnet ist. Als Material für die Gleitfolie ist Kunststoffmaterial einsetzbar. Gute Ergebnisse wurden mit Folien aus Polytetrafluorethylene (PTFE) erzielt. Folien aus diesem Material zeichnen sich durch ein sehr geringes Adhäsionsvermögen, also einem Anlieg- oder Anklebvermögen aus. Gleitfolien, die aus solchem Material hergestellt sind, wirken wie ein "Kugellager", erlauben also einen leichtgängigen Lauf des beweglichen Teiles auf dem feststehenden Element. Es kann hierbei vorgesehen werden, daß die Gleitfolie entweder auf dem beweglichen oder auf dem feststehenden Element angeordnet ist. Da die mechanischen Widerstände, also die Reibwiderstände, sehr gering sind, werden dadurch die erreichbaren Beschleunigungen und somit die erreichbaren Schaltzeiten günstig beeinflußt. Darüberhinaus wird durch die Folie, die an sich ein geringes spezifisches Gewicht hat und somit zum Gesamtgewicht des Gerätes kaum beiträgt, ein Element angeboten, um eine extrem hohe Lebensdauer des Linearantriebes, wie dies in den verschiedenen Einsatzbereichen gefordert wird, zu erreichen.

Auch ist vorgesehen, daß der Mittelpol von einem Führungsrohr umgeben ist, welches ebenfalls Teil des Lagers ist und der Schlitten auf dem Führungsrohr geführt ist. Es ist günstig, den gesamten Mittelpol seitlich von einem Rohr zu verdecken, das sowohl der Zentrierung als auch der Lagerung des Schlittens, insbesondere des dem Rohrdurchmesser angepaßten Spulenkörpers, dient. Es ist vorgesehen, das Rohr aus insbesondere nicht magnetischem Material zu fertigen.

Das Führungsrohr ist dabei einstückig mit dem Lager verbunden, oder gehört als zusätzliches Teil, welches z. B. mit dem Lager verklebt oder verpreßt ist, zum Lager.

Auch ist es günstig, daß an dem Schlitten ein Kopplungselement vorgesehen ist, um die Bewegung des Schlittens auf andere Elemente zu übertragen. Das Kopplungselement, welches zum Beispiel nippel- oder laschenartig ausgestaltet ist, bietet eine Schnittstelle für weitere Elemente, die durch die Bewegung des Schlittens in gewünschter Weise gesteuert werden sollen. In gleicher Weise ist es aber auch möglich, als Kopplungselement nur einen vorstehenden Stift oder Dorn vorzusehen, welcher im Endbereich der Bewegung des Schlittens auf einen entsprechenden Kontakt einwirkt oder eine entsprechende Funktion auslöst. Es ist klar, daß die Verbindung des Kopplungselementes mit einem zusätzlichen Schaltelement die bewegte Masse erhöht und dadurch die Reaktionsgeschwindigkeit sinkt.

Auch ist vorgesehen, daß elektrische Anschlußklemmen vorgesehen sind, die durch hochflexible elektrische Kabel mit der/den Wicklung/en verbunden ist/sind. Es ist zu beachten, daß das elektrisch beaufschlagte Element eine sehr hohe Lebensdauer (bis zu mehreren Milliarden Schaltvorgängen) erreichen soll. Auf Grund der Bewegung, die entsprechend der Erfindung auch erhebliche Hublängen erreichen kann, haben die elektrischen Kabel, die die Anschlußklemmen mit der Wicklung auf der Spule verbinden, eine besondere Eigenschaft. Durch die Verwendung von hochflexiblen elektrischen Kabeln wird selbst bei den Anforderungen entsprechenden Belastungen eine hohe Zuverlässigkeit erreicht.

In der Zeichnung ist die Erfindung schematisch dargestellt. Es zeigen:
- Fig. 1: einen teilweisen vertikalen Schnitt durch einen erfindungsgemäßen Linearantrieb und
- Fig. 2 bis Fig. 5: vertikale Schnitte durch weitere Varianten des erfindungsgemäßen Linearantriebes.

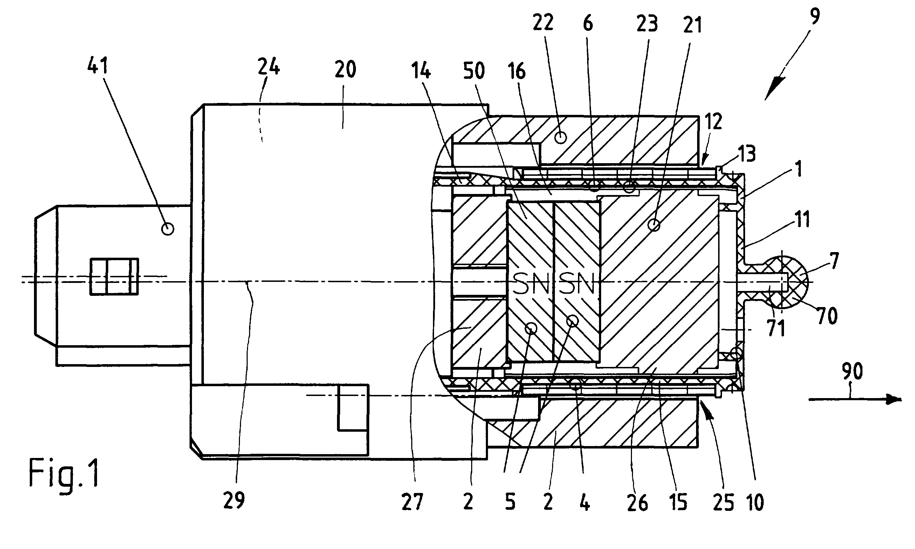

Der in Fig. 1 dargestellte Linearantrieb ist ca. dreifach vergrößert abgebildet.

Der Linearantrieb 9 ist als System mit einem Hubmagneten vergleichbar. Der Linearantrieb 9 umfaßt ein im Wesentlichen stillstehendes Lager 2, in oder auf welchem ein Schlitten 1 beweglich führbar ist. Das Lager 2 umfaßt hierbei magnetische Elemente 5, die mit der Wicklung 4, welche auf dem beweglichen Schlitten 1 aufgebracht ist, derart zusammenwirkt, daß bei Strombeaufschlagung das in der Wicklung 4 entstehende Magnetfeld eine Abstoßung des Schlittens 1 von dem Lager 2, in Fig. 1 nach rechts durch den Pfeil 90 angedeutet, erfährt und so die gewünschte Bewegung des Linearantriebes 9 durchführt.

Das Lager 2 umfaßt hierbei auch das Gehäuse 20, in welchem der Linearantrieb 9 im Wesentlichen eingebettet ist. Das Lager 2 besitzt auch Durchbrüche bzw. Führungen für die nicht weiter dargestellten elektrischen, flexiblen Leitungen, die die Anschlußklemmen 41 mit der Wicklung 4, welche auf dem Schlitten 1 angeordnet ist, verbindet. Zur Gewichtsersparnisse ist es möglich, das Lager 2 als Gestell auszubilden, wobei insbesondere bei der Ausgestaltung des Schlittens 1 als Spule 10 auch das Lager 2 einen im Wesentlichen rotationssymmetrischen oder runden Aufbau aufweist.

Das Lager 2 besteht aus mehreren Teilen. Zunächst ist das durch das Gehäuse 20 verdeckte Gestell 24 zu nennen, welches als Grundkörper fungiert. Im rechten Bereich des Lagers 2, in dem Bereich in dem die Fig. 1 geschnitten dargestellt ist, sind weitere Teile des Lagers 2 angedeutet. Es ist ein Mittelpol 21 vorgesehen, welcher im Wesentlichen rotationssymmetrisch um die Symmetrie- bzw. Geräteachse 29 mittig angeordnet ist und von dem Schlitten 1 umgeben ist. Desweiteren ist im äußeren Bereich (außerhalb des Schlittens 1) der Außenpol 22 angeordnet, der ebenfalls kreisrund, rohrähnlich geschlossen ist.

Das Lager 2, hierbei insbesondere die Teile des Lagers 2, der Mittelpol 21 und/oder der Außenpol 22, führen den Schlitten 1.

Der Schlitten 1 ist in der hier gezeigten Ausführungsform als Spule bzw. Spulenkörper 10 ausgebildet. Der Spulenkörper 10 ist hierbei im Wesentlichen rohrförmig mit einer endseitigen Deckelplatte 11 ausgestaltet. An der Spule 10 ist in der Mantelfläche 12 ein Flansch 13 vorgesehen, um die, auf dem Spulenkörper 10 aufgebrachte Wicklung 4 zu führen. Der Spulenkörper 10 weist auf der dem Lager 2 zugewandten und der Platte 11 abgewandten Seite mehrere Füßchen 14 auf. Diese ergeben eine Führung des Schlittens 1 in dem Lager 2. Auch bieten die Füßchen einen Leitungskanal für den Anschlußdraht. Der Anschlußdraht verbindet die Anschlußklemmen 41 mit der Wicklung 4, wobei im Boden des Lagers 2 Durchführungsöffnungen vorgesehen sind.

Die Deckelplatte 11 hat nicht nur die Aufgabe der Spule 10 eine gewisse Stabilität zu verleihen, sondern trägt konzentrisch zur Achse 29 das Kopplungselement 7, welches hierbei nippelartig 70 ausgestaltet ist. Der Nippel 70 ist auf der dem Lager 2 zugewandten Seite hohl. Diese Aushöhlung 71 beeinträchtigt die Funktion des Kopplungselementes nicht, reduziert aber das Gewicht.

Von besonderem Interesse ist es, daß der Schlitten 1 bezüglich seines Gewichtes optimiert ist. Da die Kräfte, die durch die Elektromagnete bzw. die magnetischen Elemente erreichbar sind, aufgrund der gegebenen Platzgegebenheiten und der Wärmeentwicklung der Magnete begrenzt ist, kann eine schnelle Schaltzeit nur dann erfolgen, wenn hohe Beschleunigungen erreicht werden.

Hierbei ist es günstig, daß die Masse reduziert wird, wobei dies insbesondere z. B. durch die Verwendung der Aushöhlung 71 erreicht wird, aber auch durch die spezielle Ausgestaltung des Spulenkörpers 10. Der Spulenkörper 10 weist eine sehr dünnwandige Spulenwand 15 auf. Die Wanddicke des Spulenkörpers 10 beträgt nur bis zu ca. 10 % des Durchmessers des Spulenkörpers. Neben der gewichtsparenden Auslegung des Spulenkörpers 1 ist auch die Wahl des Werkstoffes des Spulenkörpers 1 von Interesse, da durch eine geringere Dichte die resultierende Masse des Spulenkörpers ebenfalls gesenkt werden kann. Bevorzugter Weise wird der Spulenkörper 10 aus Kunststoff gefertigt. Hierbei ist es von Vorteil, daß der Kunststoff auch gieß- bzw. spritzfähig oder sonstig verformbar ist, um in einem Arbeitsgang sowohl den Flansch 13 als auch die Deckelplatte 11 einschließlich des Kopplungselementes 7 herzustellen. Der so gebildete Schlitten 1 ist nicht nur leicht sondern auch günstig herstellbar.

Es gibt drei verschiedene Möglichkeiten wie der Schlitten 1 von dem Lager 2 geführt wird:
1. Der Schlitten 1 umfaßt das Lager 2. Dies ist in Fig. 1 z. B. durch die Verwendung des Mittelpoles 21 angedeutet, welcher den durch den Spulenkörper 10 zur Verfügung gestellten Innenraum 16 im Wesentlichen ausfüllt.
2. Das Lager 2 umschließt den Schlitten 1. Eine solche Ausgestaltung wäre z. B. in Fig. 1 im Zusammenhang mit dem Außenpol 22 gewählt. Der Außenpol 22 ist hierbei ebenfalls rohr- oder mantelähnlich ausgestaltet und umschließt den Schlitten 1 bzw. den Spulenkörper 10.
3. Die letzte Möglichkeit einer Führung des Schlittens 1 mit dem Lager 2 ist eine Kombination der vorgenannten Möglichkeiten 1. und 2. Es kommt hierbei natürlich auf eine entsprechend geringe Maßtoleranz an, um eine optimale Führung des Schlittens 1 in dem zwischen dem Mittelpol 21 und dem Außenpol 22 sich ringförmig erstreckenden Spalt 25 zu erreichen. Gerade das Zusammenwirken des Mittelpoles 21 und des Außenpoles 22 ist im Hinblick auf die magnetischen Eigenschaften des Linearantriebes von Interesse.

Die Pole 21,22 sind z. B. aus einem einen magnetischen Fluß leitenden Material gebildet. Der Arbeitsluftspalt 25, der zwischen dem Außen- 22 und Mittelpol 21 besteht, bleibt bei der Bewegung des Schlittens 1 konstant, das heißt, die dynamischen Eigenschaften des Linearantriebes ändern sich mit der Bewegung des Schlittens 1 nicht. Bei entsprechender konstruktiver Auslegung ist es möglich, einen verhältnismäßig kleinen Arbeitsluftspalt vorzusehen. Um die Führung des Schlittens 1 auf dem Mittelpol 21 zu verbessern, ist in dem Mittelpol, welcher insbesondere aus mehreren Elementen besteht, der äußerste, in Fig. 1 der rechte Teil des Mittelpols, mit einem radialumlaufenden Flansch 26 ausgestattet, auf dem ein Führungsrohr 23 aufgeschoben ist und aufliegt. Das Führungsrohr 23 kann hierbei als Meterware beliebig genau hergestellt werden und ergibt so eine exakte Führung für den Schlitten 1, insbesondere für den ebenfalls zylindrisch bzw. rohrartig ausgestalteten Spulenkörper 10. Die Ausgestaltung des Mittelpols 21 wird dadurch sehr stark erleichtert, da die Führungsaufgabe auf ein separates Element übertragen wird, welches die sonstigen dynamischen Eigenschaften des Linearantriebes 9, insbesondere das Gewicht des Schlittens 1, nicht beeinträchtigt. Hierdurch ist es einfach möglich, durch Variation des Mittelpoles, insbesondere der magnetischen Elemente 5, die an dem Mittelpol 21 vorgesehen sind, die Eigenschaften des Linearantriebes 9 zu verändern.

Neben der Funktion der Lagerung erfüllt das Führungsrohr 23 auch eine Zentrierung der gesamten Anordnung. Das Führungsrohr 23 besteht hierbei z. B. aus nichtmagnetischem Material. Es kann aber auch vorgesehen werden, zur Verstärkung der magnetischen Eigenschaften des Mittelpoles, das Rohr 23 aus einem entsprechend magnetischen oder magnitisierbaren Material herzustellen.

Für die Bewegung des Schlittens 1 auf dem Lager 2 ist das Zusammenwirken der magnetischen bzw. elektromagnetischen Kräfte, der magnetischen Elemente 5, die mit dem Lager 2 verbunden sind, und das Magnetfeld, welches durch die strombeaufschlagte Wicklung 4 auf der Spule 10 bzw. dem Schlitten 1 entsteht, verantwortlich. In dem in Fig. 1 dargestellten Ausführungsbeispiel sind die magnetischen Elemente 5 im Mittelpol 21 angeordnet. Mit "S" bzw. "N" sind jeweils die Magnetpole gekennzeichnet. Bekanntermaßen ist bei einer Spule bzw. bei einer Magnetspule der Magnetfeldlinienverlauf geschlossen, wobei die Magnetfeldlinien im Spuleninneren parallel zur Spulenachse konzentriert verlaufen, das Magnetfeld im Innern also am höchsten ist. Durch die erfindungsgemäße Ausgestaltung werden in geschickter Weise die Vorteile der Spulenanordnung mit der Ausgestaltung des Mittelpoles kombiniert. Das sich aufgrund der Strombeaufschlagung in der Spule aufbauende Magnetfeld ist in dem Innenraum 16 am größten und wirkt dort direkt mit dem durch die magnetischen Elemente 5 erzeugten Magnetfeld, entsprechend der gewünschten Bewegung des Schlittens 1, zusammen. Dadurch wird eine sehr kurze Ansprechzeit des Schlittens 1 und damit auch des Linearantriebes 9 auf einen Steuerstrom erreicht. Verbunden mit dem geringen Gewicht des Spulenkörpers 10 wird dadurch letztendlich auch eine hohe Beschleunigungskraft erreicht, wobei zu beachten ist, daß beide Bereiche für sich optimiert, aber in sich greifend ausgebildet sind. Der leichte Spulenkörper umschließt den magnetischen Mittelpol, das sich aufbauende Magnetfeld wirkt direkt gegen das Magnetfeld des Mittelpoles und der leichtgebildete Spulenkörper besitzt trotzdem eine ausreichende mechanischen Stabilität für die entsprechende Ansteuerung von beliebigen externen Elementen oder Baugruppen.

Bei entsprechender Umpolung des Stromes kann natürlich auch eine Rückzugsbewegung des Schlittens 1, in gleicher Weise, wie die Steuerbewegung entlang des Pfeiles 90, erreicht werden.

Als magnetische Elemente 5 sind, wie in Fig. 1 angeordnet, z. B. Permanentmagnete 50 einsetzbar. Wie dargestellt können eine Mehrzahl von Permanentmagneten vorgesehen werden, die auf den Polschuh 27 des Mittelpoles 21 aufgesetzt und mit diesem z. B. verklebt oder verpreßt werden. Der Polschuh 27 ist hierbei mit dem Boden bzw. Topf 30 des Lagers 2 verbunden. Der Mittelpol 21 wird hierbei neben dem Polschuh 27, den beiden Permanentmagneten 50, noch durch ein End- oder Abschlußstück 28 gebildet, wobei das End- bzw. Abschlußstück 28 den Führungsflansch 26 für die Führung des Führungsrohres 23 trägt. Durch diese Ausgestaltung ist es in einfacher Weise möglich, verschiedene magnetische Eigenschaften und auch verschiedene Hublängen oder andere Eigenschaften, mit einer verhältnismäßig geringen Zahl von Bauelementen zu erreichen. Die Variabilität eines solchen Linearantriebkonzeptes ist sehr groß.

Neben der Verwendung von Permanentmagneten 50 ist natürlich auch der Einsatz eines Elektromagneten aus einer strombeaufschlagten Spule als magnetisches Element 5 vorstellbar.

Ein weiterer Vorteil der Erfindung liegt darin, daß zwischen dem Lager 2 und dem Schlitten 1 eine Gleitfolie 6 vorgesehen ist. Diese Gleitfolie 6 kann mit dem Schlitten 1 beweglich oder mit dem Lager 2 feststehend ausgebildet sein. Günstigerweise ist die Gleitfolie 6 aus einem Material gebildet, welches ein geringes Adhäsionsvermögen aufweist, um ein "Verkleben" oder "Anliegen" an dem jeweiligen anderen Element möglichst zu vermeiden. Gerade die Haftkräfte, die bei Stillstand des Linearantriebes entstehen können, werden durch die Gleitfolie stark unterdrückt, wodurch eine schnelle Ansprechbarkeit des Linearantriebes resultiert.

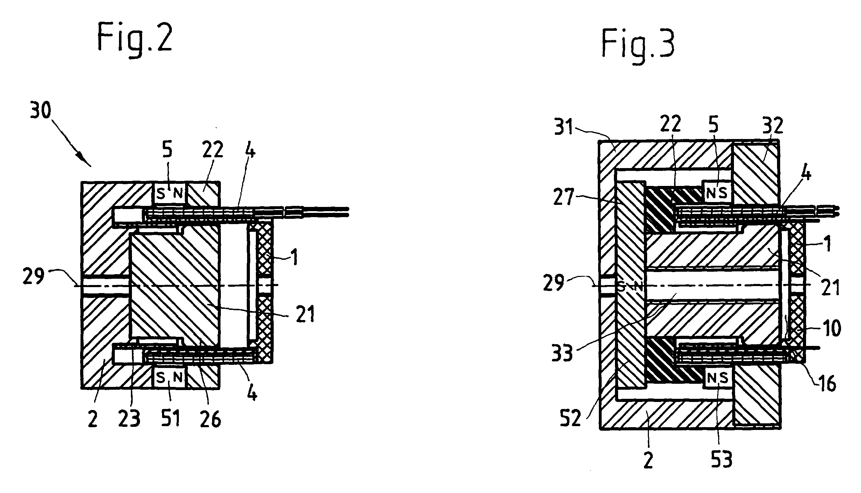

In den Figuren 2 bis 5 sind weitere Anordnungen der magnetischen Elemente 5 schematisch dargestellt.

In Fig. 2 ist das magnetische Element 5 als Permanentringmagnet 51 im Außenpol 22 angordnet, wobei der Magnetring 51 mit einer Polung "S-N" parallel zur Geräteachse 29 und somit auch zur Achse 29 des Spulenkörpers 10 orientiert ist.

In Fig. 2 ist die topfartige (30) Ausgestaltung des Lagers 2 gezeigt. Der Topf 30 ist hierbei aus magnetisch leitenden Material gebildet. Der Mittelpol 21 weist einen Ringflansch 26 auf, der mit dem vorderen, offenen Teil des Außenpols 22 eine Führung des Schlittens 1 ergibt. Die axiale Länge des Ringmagnetes entspricht hierbei ca. 30 bis 40 % der Länge der Spule 4. Für eine weitere Unterstützung des Schlittens 1 schließt sich am inneren Ende des Ringes (mit oder ohne Spalt) ein Führungsrohr 23 an.

In Fig. 3 ist eine Variante des erfindungsgemäßen Linearantriebes gezeigt. Die magnetischen Element 5 sind hierbei zum einen im Polschuh 27 und zum anderen im Außenpol 22 angeordnet. Im Polschuh 27 befindet sich eine z. B. runde Magnetplatte 52.

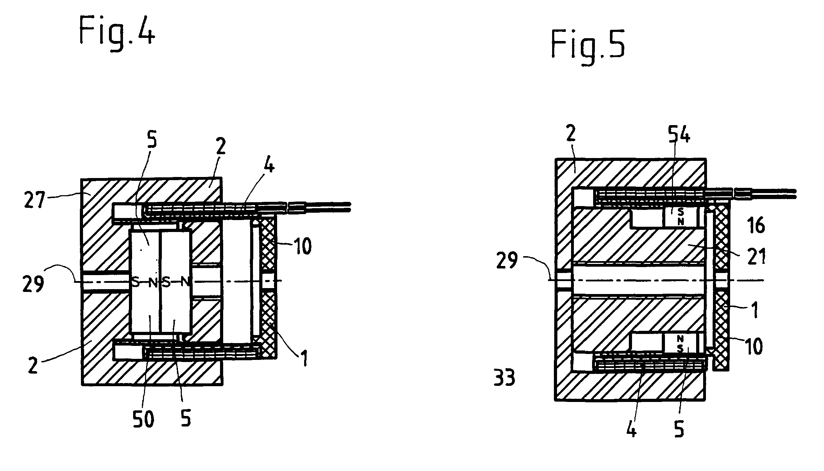

Die Länge des Mittelpols 21 entspricht hierbei im wesentlichen der Länge der Spule 10 bzw. der Wicklung 4. Die Dicke (in axialer Richtung die Länge) der Magnete, entspricht hierbei ca. 40 bis 60 % der axialen Länge der Wicklung. In den Beispielen nach Fig. 1 bzw. Fig. 4 beträgt dies ca. 50 %.

Die Polarisierung der beiden magnetischen Elemente 52,53 ist hierbei entgegengerichtet. Der im Wesentlichen plattenförmige Magnet 52 des Polschuhes 27 weist ebenfalls eine Polarisierung parallel zur Achse 29 auf. Der Magnet 53 des Außenpoles 22 ist ringförmig ausgestaltet und ebenso parallel zur Achse 29 poralisiert, jedoch der Magnetisierung des Polschuhmagneten 52 entgegengerichtet.

Der Mittelpol 21 und der Außenpol 22 wird von einem topfartigen Joch 31 umschlossen. Am vorderen Ende des Jochs 31 ist ein Führungsring 32 angeordnet, der auch an dem Ringmagneten 53 aufliegt. Der Mittelpol 21 besitzt eine durchgehende Bohrung 33, die koaxial zur Achse 29 angeordnet ist. In der Bohrung 33 kann ein Gewinde vorgesehen sein, um den Linearantrieb zu befestigen. Die Bohrung 33 dient z. B. auch für eine Belüftung des Spuleninneraumes 16, um durch die schnellen Bewegungen des Schlittens 2 nicht im Spuleninnenraumes 16 einen Unterdruck zu erzeugen, welcher der Bewegung des Schlittens 2 behindert.

In Fig. 4 ist schematisch nochmals der Aufbau des Linearantriebes gezeigt, wie er im Wesentlichen auch schon in Fig. 1 diskutiert ist.

In Fig. 5 wird abschließend eine weitere Variante des erfindungsgemäßen Linearantriebes vorgestellt.

Im Gegensatz zu den Ausgestaltungen gemäß Fig. 1 bis 4 wird hier keine axial, also parallel zur Achse 29, orientierte Polung des magnetischen Elementes eingesetzt, sondern die Polung des magnetischen Elementes 51 ist radial bzw. rechtwinklig zur Achse 29. Hierbei sitzt das magnetische Element 5, hier als Ringmagnet 54 ausgestaltet, auf dem Mittelpol 21. Es ist klar, daß diese Magnetpolanordnung besonders im Austauchbereich des Schlittens 1 einen verstärkten magnetischen Effekt erreichen wird, nämlich dann, wenn der Schlitten 1 bzw. der Spulenkörper 10 sehr weit nach rechts verfahren ist und die Wicklung 4 bzw. das durch die Wicklung 4 erzeugte magnetische Feld ein Magnetfeldlauf aufweist, welches im Wesentlichen parallel zu dieser radialen Ausrichtung der Polung des Ringmagnetes 54 ist. Die Höhe des Ringmagnetes beträgt hierbei nur ca. 40 % der Höhe der Spule bzw. der Wicklung. Natürlich ist es möglich, einen axialporalisierten und einen radialporalisierten Magnet bzw. ein magnetisches Element 5 miteinander zu kombinieren, um bei einem entsprechenden Hubweg eine wunschgemäße Beweglichkeit oder Ansteuerkraft zu erreichen. Genauso wie in Fig. 3 weist auch hier der Mittelpol 21 eine Bohrung 33 auf.

Neben dem Linearantrieb als Vorrichtung für beliebige Zwecke, ist es auch möglich, die Verwendung dieses Linearantriebes z. B. in einer Textilmaschine vorzusehen.

Die jetzt mit der Anmeldung und später eingereichten Ansprüche sind Versuche zur Formulierung ohne Präjudiz für die Erzielung weitergehenden Schutzes.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

## Patentansprüche

1. Linearantrieb, im wesentlichen bestehend aus einem feststehenden Lager und einem auf dem Lager geführten beweglichen Schlitten, wobei die Bewegung des Schlittens durch elektromagnetische Kräfte erfolgt, **dadurch gekennzeichnet**, **daß** der Schlitten (1) eine oder mehrere Wicklungen (4) trägt, die mit Strom beaufschlagbar ist/sind und am Lager (2) ein oder mehrere magnetische Elemente (5) vorgesehen ist/sind, die im Zusammenwirken mit der strombeaufschlagten Wicklung (4) eine Bewegung des Schlittens (1) ergibt.

2. Linearantrieb nach Anspruch 1, **dadurch gekennzeichnet**, **daß** der Schlitten (1) spulenartig (10) ausgestaltet ist.

3. Linearantrieb nach einem oder beiden der vorhergehenden Ansprüche, **dadurch gekennzeichnet**, **daß** das Lager (2) den Schlitten (1) mantelartig umgibt, derart, daß der Schlitten (1) in dem Lager (2) bzw. in einem Teil des Lagers geführt wird.

4. Linearantrieb nach einem oder mehreren der vorhergehenden Ansprüche, **dadurch gekennzeichnet**, **daß** der Schlitten (1) das Lager (2) bzw. einen Teil des Lagers umgibt.

5. Linearantrieb nach einem oder mehreren der vorhergehenden Ansprüche, **dadurch gekennzeichnet**, **daß** der Schlitten (1) bzw. der Spulenkörper (10) aus leichtem Material, insbesondere aus Kunststoff gefertigt ist.

6. Linearantrieb nach einem oder mehreren der vorhergehenden Ansprüche, **dadurch gekennzeichnet**, **daß** der Schlitten (1) bzw. der Spulenkörper (10) dünnwandig ist, insbesondere die Wanddicke des Spulenkörpers (10) bis zu 10% des Durchmessers des Spulenkörpers beträgt.

7. Linearantrieb nach einem oder mehreren der vorhergehenden Ansprüche, **dadurch gekennzeichnet**, **daß** das Lager (2) einen Mittelpol (21) und/oder einen Außenpol (22) aufweist, wobei der Schlitten (1) auf dem Mittelpol (21) geführt ist.

8. Linearantrieb nach einem oder mehreren der vorhergehenden Ansprüche, **dadurch gekennzeichnet**, **daß** ein Außenpol (22) vorgesehen ist, welcher rohrförmig ausgebildet ist und der Schlitten (1) in dem Außenpol (22) geführt ist.

9. Linearantrieb nach einem oder mehreren der vorhergehenden Ansprüche, **dadurch gekennzeichnet**, **daß** an dem Außen- und/oder Mittelpol (21,22) ein oder mehrere Permanentmagnete (50) als magnetische Elemente (5) angeordnet sind.

10. Linearantrieb nach einem oder mehreren der vorhergehenden Ansprüche, **dadurch gekennzeichnet, daß** das Lager (2) topfartig (30) ausgebildet ist und der Boden dieses Topfes (30) als Polschuh (27) für den Mittel- und/oder Außenpol (21,22) dient.

11. Linearantrieb nach einem oder mehreren der vorhergehenden Ansprüche, **dadurch gekennzeichnet, daß** zwischen dem Lager (2) und dem Schlitten (1), insbesondere dem Spulenkörper (10) eine Gleitfolie (6) angeordnet ist.

12. Linearantrieb nach einem oder mehreren der vorhergehenden Ansprüche, **dadurch gekennzeichnet, daß** der Mittelpol (21) von einem Führungsrohr (23) umgeben ist, welches ebenfalls Teil des Lagers (2) ist und der Schlitten (1) auf dem Führungsrohr (23) geführt ist.

13. Linearantrieb nach einem oder mehreren der vorhergehenden Ansprüche, **dadurch gekennzeichnet, daß** an dem Schlitten (1) ein Kopplungselement (7) vorgesehen ist, um die Bewegung des Schlittens (1) auf andere Elemente zu übertragen.

14. Linearantrieb nach einem oder mehreren der vorhergehenden Ansprüche, **dadurch gekennzeichnet, daß** elektrische Anschlussklemmen (41) vorgesehen sind, die durch hochflexible elektrische Kabel mit der/den Wicklung/Wicklungen (4) verbunden ist/sind.
